# EUROPEAN PATENT APPLICATION

(11) **EP 4 701 010 A1**
(43) Date of publication of application: **25.02.2026**
(21) Application number: 23934097.9
(22) Date of filing: 21.04.2023
(51) Int. Cl.: H02B 13/025

(54) **SWITCHGEAR**

(71) Applicant: MITSUBISHI ELECTRIC CORPORATION, Chiyoda-ku Tokyo 100-8310 (JP)
(72) Inventor: KAWANISHI Katsunori, Tokyo 100-8310 (JP)
(74) Representative: Witte, Weller & Partner Patentanwälte mbB
(86) International application number: PCT/JP2023/015851
(87) International publication number: WO 2024/218952

(57) **Abstract**

In a switchgear (100), a main circuit chamber (1) and a cable chamber (2) are partitioned from each other and provided in a casing (9). A first pressure release plate (1D) that covers a first opening (1H) provided on a first wall surface (1W) partitioning the main circuit chamber (1) and a duct (6), and a second pressure release plate (2D) that covers a second opening (2H) provided on a second wall surface (2W) partitioning the cable chamber (2) and the duct (6) are provided. The first pressure release plate (1D) is configured to communicate the main circuit chamber (1) and the duct (6) by an increase in pressure in the main circuit chamber. The first opening (1H) is provided between a discharge port (6H) inside the duct (6) and the second opening (2H), and the first pressure release plate (1D) constitutes a closing portion (50) that closes a passage of the duct (6) inside the duct (6) according to the pressure increase in the main circuit chamber (1).

## Description

### TECHNICAL FIELD

The present disclosure relates to a switchgear.

### BACKGROUND ART

A switchgear as a switching device that distributes high-voltage electric power received from an electric power company or the like to each load by using a circuit breaker or the like generally includes: a main circuit unit that performs interruption of high-voltage current or the like, a cable connection unit connected to terminals of the main circuit unit, a control unit that performs control, a drive unit that drives a circuit breaker or the like in the main circuit unit, a bus unit connected to the main circuit unit, and the like, each of which is often housed in a separate compartment by a partition.

Especially, a gas-insulated switchgear houses the main circuit unit to which high voltage is applied in a sealed container, and by filling the sealed container with SF6 gas having excellent insulation performance, achieves a compact layout for arrangement positions and the like of main circuit devices such as a circuit breaker.

In recent years, as an alternative to SF6 gas, for example, a gas excellent also in environmental aspects such as dry air is sometimes filled as a substitute gas.

In such a gas-insulated switchgear, when a short circuit or the like occurs inside a sealed container in which the main circuit unit is housed or inside a cable chamber in which the cable connection unit is housed, a large pressure increase occurs in the main circuit chamber or the cable chamber due to the energy thereof.

Therefore, a gas-insulated switching device as a conventional switchgear having the following configuration is disclosed, in which a pressure release duct is provided to release to the outside the amount of gas corresponding to the pressure increase by controlling the gas discharge direction and path.

That is, in a conventional gas-insulated switching device, a flapper that releases increased pressure due to an internal arc to a pressure release duct side is provided at an upper portion of a pressure release duct of a cable chamber.

Also, a flapper that releases increased pressure due to an internal arc in the main circuit chamber to a pressure release duct side is provided. The increased pressure in each chamber is released to the outside via the pressure release duct. (see, for example, Patent Document 1).

### CITATION LIST

### PATENT DOCUMENT

Patent Document 1: International publication no. WO WO2020/100183.

### SUMMARY OF THE INVENTION

### PROBLEM TO BE SOLVED BY THE INVENTION

In the above-described conventional gas-insulated switching device as a switchgear, the main circuit chamber and the cable chamber share a common pressure release duct. In such a case, when a short circuit or the like occurs in the main circuit, if a first arc energy released to the pressure release duct via a pressure release plate of the main circuit chamber becomes greater than a second arc energy released via a pressure release plate of the cable chamber when a short circuit or the like occurs in the main circuit, it is necessary to make the pressure release plate on the cable chamber side have a structure that can withstand the first arc energy, otherwise, the pressure release from the main circuit chamber affects the cable chamber.

Therefore, when the strength (rigidity) of the pressure release plate on the cable chamber side is increased in consideration of the first arc energy, there arises a problem that, when a relatively small second arc energy is released, the pressure release plate on the cable chamber side does not operate to release pressure.

In such a case, the cable chamber becomes a sealed structure, and a pressure increase inside the cable chamber due to the second arc energy becomes greater compared to a pressure increase in a case where the pressure release plate operates, so it is necessary to design the strength of the cable chamber to be high. However, increasing the strength of the cable chamber results in a problem of cost increase and weight increase.

The present disclosure has been made to solve the above problem, and an object of the present disclosure is to provide a low-cost and lightweight switchgear that can reduce the influence on the cable chamber side due to the pressure release from the main circuit chamber while ensuring the pressure release operation on the cable chamber side.

### MEANS TO SOLVE THE PROBLEM

A switchgear having a main circuit chamber housing a main circuit device, a cable chamber housing a cable supplying electric power to the main circuit device, the main circuit chamber and the cable chamber being partitioned from each other and provided in a casing, and a duct discharging pressure inside the main circuit chamber and the cable chamber to an outside of the casing via an outlet, according to the present disclosure includes: a first pressure release plate covering a first opening provided on a first wall surface partitioning the main circuit chamber and the duct; and a second pressure release plate covering a second opening provided on a second wall surface partitioning the cable chamber and the duct, wherein the first pressure release plate is configured to open the first opening by an increase in pressure in the main circuit chamber so as to communicate the main circuit chamber and the duct, the second pressure release plate is configured to open the second opening by an increase in pressure in the cable chamber so as to communicate the cable chamber and the duct, the first opening is provided between the outlet and the second opening of the duct, and the first pressure release plate constitutes a closing portion closing a passage of the duct between the first opening and the second opening inside the duct in a state where the first opening is opened.

### EFFECT OF THE INVENTION

The switchgear to the present disclosure makes it possible to provide a switchgear that is a low-cost and lightweight and can reduce the influence on the cable chamber side due to the pressure release from the main circuit chamber while ensuring the pressure release operation on the cable chamber side.

### BRIEF DESCRIPTION OF THE DRAWINGS

[FIG. 1] FIG. 1 is a sectional view showing a schematic configuration of a switchgear according to Embodiment 1.
[FIG. 2] FIG. 2 is a partially enlarged view of the switchgear according to Embodiment 1.
[FIG. 3] FIG. 3 is a conceptual diagram showing a path through which hot air caused by a pressure increase in the main circuit chamber is released in Embodiment 1.
[FIG. 4] FIG. 4 is a perspective view showing an example of a shape of a pressure release plate on the main circuit chamber side in Embodiment 1.
[FIG. 5] FIG. 5 is a perspective view showing an example of a shape of a pressure release plate on the main circuit chamber side in Embodiment 1.
[FIG. 6] FIG. 6 is a sectional view showing an example of a shape of a pressure release plate on the main circuit chamber side in Embodiment 1.
[FIG. 7] FIG. 7 is a sectional view showing a schematic configuration of a switchgear according to Embodiment 2.
[FIG. 8] FIG. 8 is a partially enlarged sectional view of the switchgear according to Embodiment 2.
[FIG. 9] FIG. 9 is a conceptual diagram showing a path through which hot air caused by a pressure increase in the main circuit chamber is released in Embodiment 2.
[FIG. 10] FIG. 10 is a conceptual diagram showing a path through which hot air caused by a pressure increase in the cable chamber is released in Embodiment 2.
[FIG. 11] FIG. 11 is a sectional view showing an example of a shape of a pressure release plate on the main circuit chamber side in Embodiment 2.
[FIG. 12] FIG. 12 is a sectional view showing an example of a shape of a partition plate in Embodiment 2.
[FIG. 13] FIG. 13 is a sectional view showing an example of a shape of a pressure release plate on the main circuit chamber side in Embodiment 2.

### DESCRIPTION OF EMBODIMENTS

### Embodiment 1

Hereinafter, a switchgear 100 according to the present embodiment will be described with reference to the drawings. In each drawing, the same reference numerals denote the same or corresponding parts.

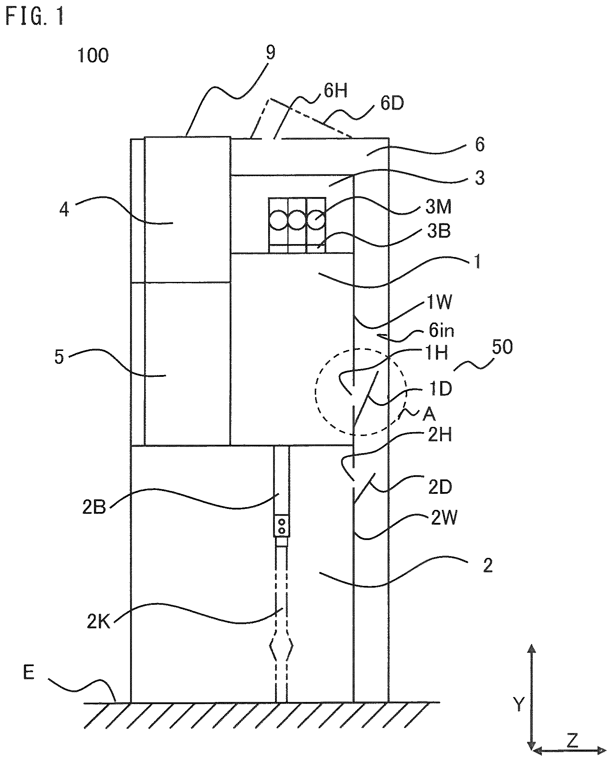

FIG. 1 is a sectional view showing a schematic configuration of the switchgear 100 according to Embodiment 1.

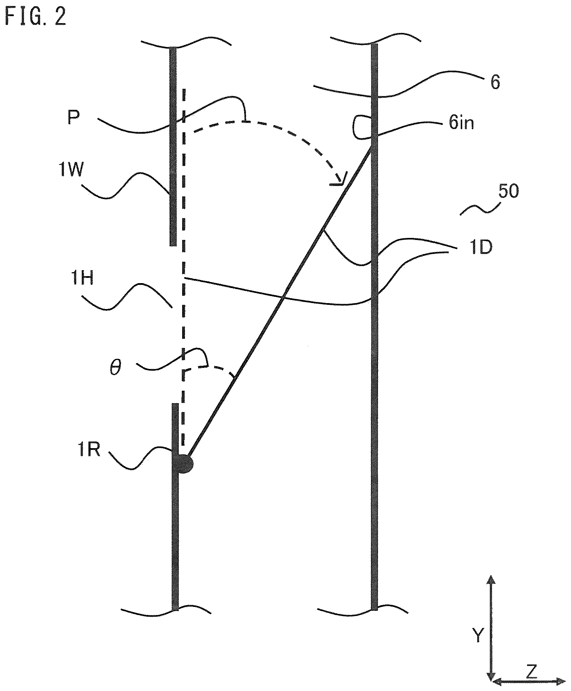

FIG. 2 is an enlarged view showing a part A of the switchgear 100 shown in FIG. 1.

In the drawings, a width direction, a depth direction, and a height direction of the switchgear 100 are indicated by arrows X, Z, and Y, respectively.

The left side in FIGS. 1 and 2 is a front side of the switchgear 100, and the right side is a rear side thereof, so that a left-right direction in FIGS. 1 and 2 corresponds to the depth direction Z of the switchgear 100.

The switchgear 100 as a switching device according to the present embodiment mainly performs power reception, distribution, and interruption, and particularly has a duct structure for releasing to the outside hot air generated by a sudden pressure increase and temperature increase due to arc energy caused by a failure such as a short circuit inside the device.

As shown in FIG. 1, the switchgear 100 has a configuration in which an interior of a casing 9 thereof is divided into a plurality of compartments, and a main circuit chamber 1, a cable chamber 2, a bus chamber 3, a low-voltage control chamber 4, a mechanism chamber 5, and a pressure release duct 6 are housed in the respective compartments.

The main circuit chamber 1 houses a circuit breaker and a disconnector (not shown) as main circuit devices that perform interruption and isolation of high current constituting a main circuit, and is a sealed container filled with insulating gas.

Below the main circuit chamber 1 in a height direction Y, the cable chamber 2, in which a cable 2K connected to one end of a conductor of the main circuit via a bushing 2B is housed, is disposed.
Above the main circuit chamber 1 in the height direction Y, the bus chamber 3, in which a bus 3M is housed, is disposed. The other end of the conductor (not shown) constituting the main circuit is connected to the bus 3M in the bus chamber 3 via a bushing 3B.

A pressure release duct 6 as a duct is disposed in a compartment on a rear side in a depth direction Z of the main circuit chamber 1, the cable chamber 2, and the bus chamber 3.

A pressure release opening 1H as a first opening is formed in a first wall surface 1W that partitions the main circuit chamber 1 and the pressure release duct 6.

A pressure release plate 1D as a first pressure release plate that covers the pressure release opening 1H is provided.

As shown in the enlarged view of FIG. 2, the pressure release plate 1D is supported at a lower portion thereof in a height direction Y by a support portion 1R. When pressure inside the main circuit chamber 1 increases, the pressure release plate 1D rotates around the support portion 1R according to the pressure increase, from a position of the pressure release plate 1D indicated by a dashed line in FIG. 2 in a direction of an arrow P indicated by a dashed line, that is, toward a rear side of the switchgear 100, to a position of the pressure release plate 1D indicated by a solid line, and moves away from the pressure release opening 1H so as to open the pressure release opening 1H.

As a result, the main circuit chamber 1 and the pressure release duct 6 communicate with each other.

The pressure release plate 1D is configured to have a length such that an edge portion thereof reaches an inner wall surface 6in inside the pressure release duct 6.

The support portion 1R is configured to be rotatable by fastening with bolts or the like.

As shown in FIG. 1, a pressure release opening 2H as a second opening is formed in a second wall surface 2W that partitions the cable chamber 2 and the pressure release duct 6.

A pressure release plate 2H as a second pressure release plate that covers the pressure release opening 2H is provided.

Although not illustrated, the pressure release plate 2H also operates, similarly to the pressure release plate 1D, to move away from the pressure release opening 2H and open the pressure release opening 2H according to a pressure increase inside the cable chamber 2.

As a result, the cable chamber 2 and the pressure release duct 6 communicate with each other.

Above the pressure release duct 6 in the height direction Y, an outlet 6H that opens to the outside and a discharge plate 6D that closes the outlet 6H are provided.

The discharge plate 6D operates to open the outlet 6H according to a pressure increase inside the pressure release duct 6.

In a normal state where no failure such as a ground fault occurs, the inside of the pressure release duct 6 is a closed space by the discharge plate 6D.

As shown in FIG. 1, a position where the pressure release opening 1H that communicates the main circuit chamber 1 with the pressure release duct 6 is provided is between the outlet 6H of the cable chamber 2 and the pressure release opening 2H, and the pressure release opening 1H is located above the pressure release opening 2H in the height direction Y.

Although the pressure release duct 6 shown in FIG. 1 extends to a ground surface E, the pressure release duct 6 does not need to extend to the ground surface E as long as the pressure release plate 1D of the main circuit chamber 1 and the pressure release plate 2H of the cable chamber 2 are housed inside the pressure release duct 6.

A case where a failure such as a ground fault occurs in the switchgear 100 configured as described above will be explained.

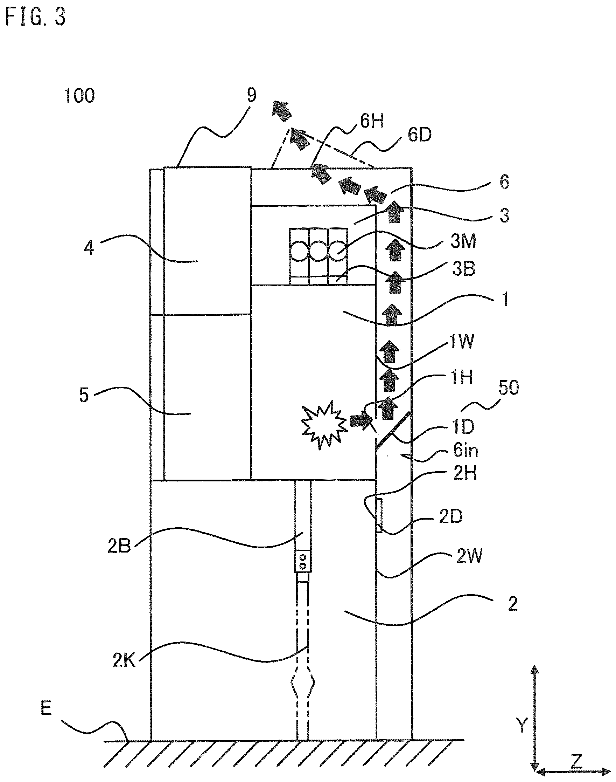

FIG. 3 is a conceptual diagram showing a path through which hot air caused by a pressure increase in the main circuit chamber 1 is released.

For example, when a ground fault or the like occurs in the main circuit and a pressure increase occurs in the main circuit chamber 1, the pressure release plate 1D operates to move away from the pressure release opening 1H and open the pressure release opening 1H, so as to communicate the main circuit chamber 1 and the pressure release duct 6.

As described above, the pressure release plate 1D is configured to have a length such that an edge portion thereof reaches an inner wall surface 6in inside the pressure release duct 6, so the pressure release plate 1D closes a passage between the pressure release opening 1H and a pressure release opening 2H inside the pressure release duct 6.

A portion that closes the passage between the pressure release opening 1H and the pressure release opening 2H inside the pressure release duct 6 using the pressure release plate 1D is referred to as a closing portion 50.

Thus, the amount of pressure increase in the main circuit chamber 1 flows into the pressure release duct 6. According to the pressure increase inside the pressure release duct 6, the discharge plate 6D opens the outlet 6H, and hot air is released to the outside of the casing 9 via the outlet 6H.

At this time, since the closing portion 50 that closes between the pressure release opening 1H and the pressure release opening 2H inside the pressure release duct 6 is provided, hot air does not flow into the cable chamber 2 side below via the pressure release duct 6.

Hereinafter, a configuration of a pressure release plate 1D1 that covers the pressure release opening 1H of the main circuit chamber 1, which is different from the configuration shown in FIG. 2, will be described.

A shape of the pressure release duct 6 will be described assuming that a cross section perpendicular to the height direction Y is rectangular.

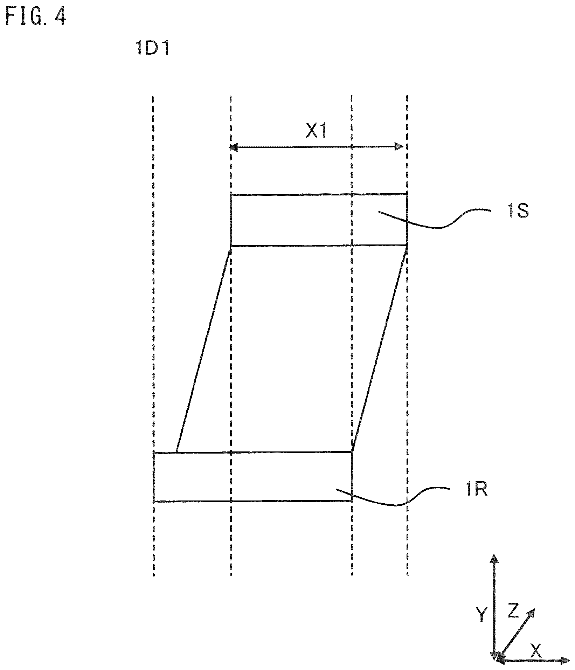

FIG. 4 is a perspective view showing an example of a shape of the pressure release plate 1D1 in Embodiment 1.

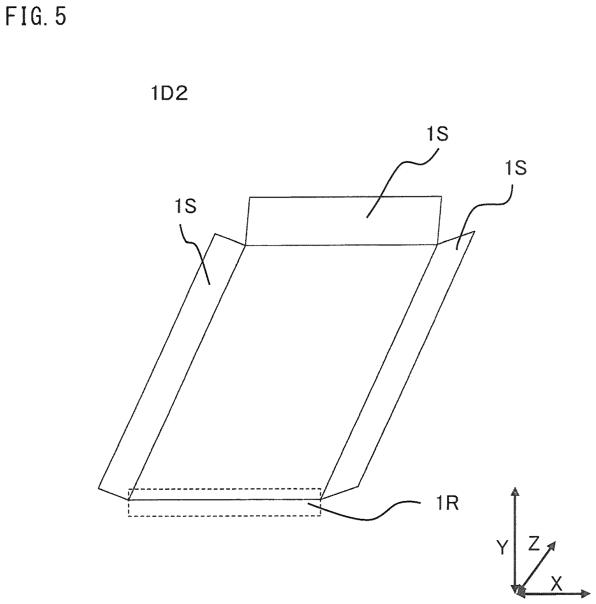

FIG. 5 is a perspective view showing an example of a shape of a pressure release plate 1D2 in Embodiment 1.

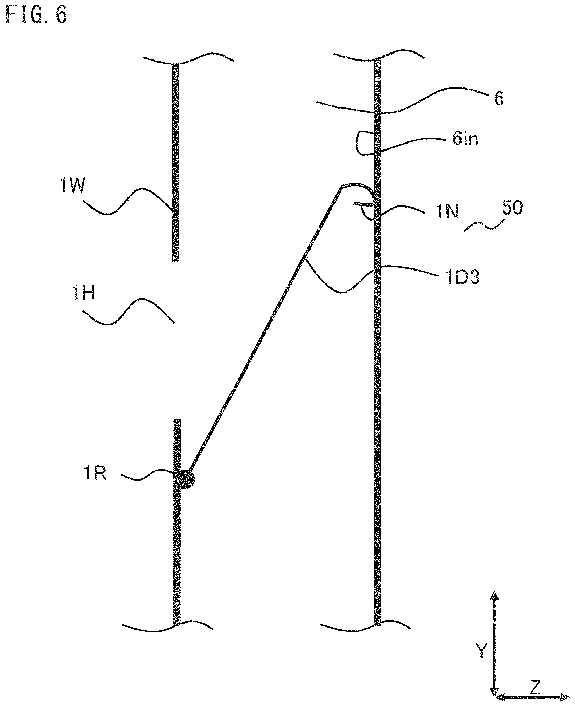

FIG. 6 is a sectional view showing an example of a shape of a pressure release plate 1D3 in Embodiment 1.

The pressure release plate 1D1 shown in FIG. 4 has, at an edge portion thereof, a creepage portion 1S that extends along the inner wall surface 6in of the pressure release duct 6 in the height direction Y.

In the present embodiment, the creepage portion 1S is configured to have the same width as a width X1 of the pressure release duct 6 in a width direction X.

With such a configuration, occurrence of a gap between the inner wall surface 6in of the pressure release duct 6 and the pressure release plate 1D1 is suppressed, so that the influence of pressure release from the main circuit chamber 1 reaching the cable chamber 2 can be suppressed.

Further, the pressure release plate 1D1 is prevented from being pressed downward by the pressure release from the main circuit chamber 1, and a highly sealed closing portion 50 can be constituted.

Further, the pressure release plate 1D2 shown in FIG. 5 is further provided with the creepage portions 1S on both sides in the width direction X. As a result, a more highly sealed closing portion 50 can be constituted.

Further, the pressure release plate 1D3 shown in FIG. 6 has, at an edge portion thereof, a claw portion 1N that is configured to be bent toward the inner wall surface 6in of the pressure release duct 6, at a position where the edge portion contacts to the inner wall surface 6in of the pressure release duct 6, when the pressure release opening 1H is opened.

When the pressure release plate 1D3 rotates to open the pressure release opening 1H, the claw portion 1N contacts the inner wall surface 6in of the pressure release duct 6, whereby operation of the pressure release plate 1D3 is restricted, and the closing portion 50 that closes the inside of the pressure release duct 6 is constituted.

In this case, the creepage portions 1S shown in FIG. 5 may be provided on both sides in the width direction X. Also in this case, it is possible to cover a wider area of an entire cross section of the pressure release duct 6 and constitute a highly sealed closing portion 50.

The switchgear of the present embodiment configured as described above is a switchgear in which a main circuit chamber housing a main circuit device, a cable chamber housing a cable supplying electric power to the main circuit device, the main circuit chamber and the cable chamber being partitioned from each other and provided in a casing, and a duct discharging pressure inside the main circuit chamber and the cable chamber to an outside of the casing via an outlet, comprising: a first pressure release plate covering a first opening provided on a first wall surface partitioning the main circuit chamber and the duct; and a second pressure release plate covering a second opening provided on a second wall surface partitioning the cable chamber and the duct, wherein the first pressure release plate is configured to open the first opening by an increase in pressure in the main circuit chamber so as to communicate the main circuit chamber and the duct, the second pressure release plate is configured to open the second opening by an increase in pressure in the cable chamber so as to communicate the cable chamber and the duct, the first opening is provided between the outlet and the second opening of the duct, and the first pressure release plate constitutes a closing portion closing a passage of the duct between the first opening and the second opening inside the duct in a state where the first opening is opened.

As described above, the first pressure release plate constitutes a closing portion that closes a passage of the duct between the first opening and the second opening inside the duct in a state where the first opening is opened. By providing the closing portion in this manner, when pressure is released from the main circuit chamber, the main circuit chamber side and the cable chamber side inside the pressure release duct become independent compartments, so that the influence of pressure release from the main circuit chamber does not reach the cable chamber.

Further, even in the configuration in which arc energy released from the main circuit chamber 1 at the time of a failure such as a short circuit in the main circuit chamber 1 becomes greater than arc energy released from the cable chamber 2 at the time of a failure such as a short circuit in the cable chamber 2, the strength of the pressure release plate 2H of the cable chamber 2 can be reduced so that it can operate by relatively small arc energy on the cable chamber 2 side.

Therefore, even when relatively small arc energy occurs in the cable chamber, the pressure release plate on the cable chamber side operates to release pressure, so a pressure increase when the cable chamber becomes sealed can be suppressed. As a result, it is possible to design the strength of the cable chamber itself to be low, and a cost reduction and a weight reduction effect can be expected.

Thus, a low-cost and lightweight switchgear that can reduce the influence on the cable chamber side due to the pressure release from the main circuit chamber while ensuring the pressure release operation on the cable chamber side can be provided.

Further, if the pressure release plate 1D of the main circuit chamber 1 is installed so as to limit an opening angle thereof, that is, so that an angle θ from the first wall surface 1W shown in FIG. 2 is within 90 degrees, hot air released from the main circuit chamber 1 can be guided upward in the pressure release duct 6.

The adjustment of the opening angle of the pressure release plate 1D may be performed, for example, by adjusting a rotation angle of the support portion 1R, or by adjusting a length of the pressure release plate 1D in a depth direction Z.

Further, in the above description, an example has been shown in which the outlet 6H is provided above the pressure release duct 6, the pressure release opening 2H of the cable chamber 2 is provided below the pressure release duct 6, and a positional relationship between the outlet 6H of the pressure release duct 6 and the pressure release opening 2H of the cable chamber 2 is vertical, but the present disclosure is not limited thereto. Even in a case where the outlet 6H of the pressure release duct 6 and the pressure release opening 2H of the cable chamber 2 are located at substantially the same position in a horizontal direction, as long as the closing portion 50 constituted by the pressure release plate 1D of the main circuit chamber 1 is provided between the outlet 6H of the pressure release duct 6 and the pressure release opening 2H of the cable chamber 2, and further, between the pressure release opening 1H of the main circuit chamber 1 and the pressure release opening 2H, it is possible to reduce the influence on the cable chamber side due to the pressure release from the main circuit chamber.

### Embodiment 2.

Hereinafter, Embodiment 2 of the present disclosure will be described with reference to the drawings, focusing on portions different from Embodiment 1 described above.

The same components as those in Embodiment 1 are denoted by the same reference numerals, and description thereof will be omitted.

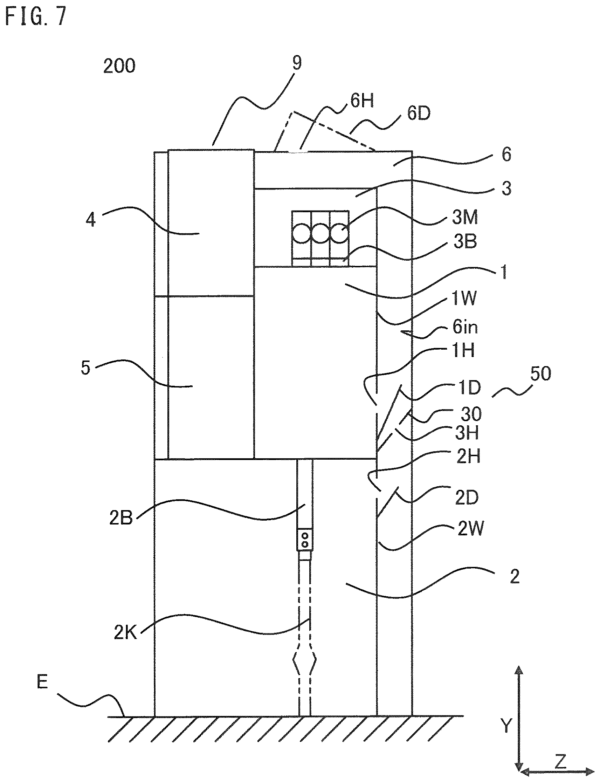

FIG. 7 is a sectional view showing a schematic configuration of a switchgear 200 according to Embodiment 2.

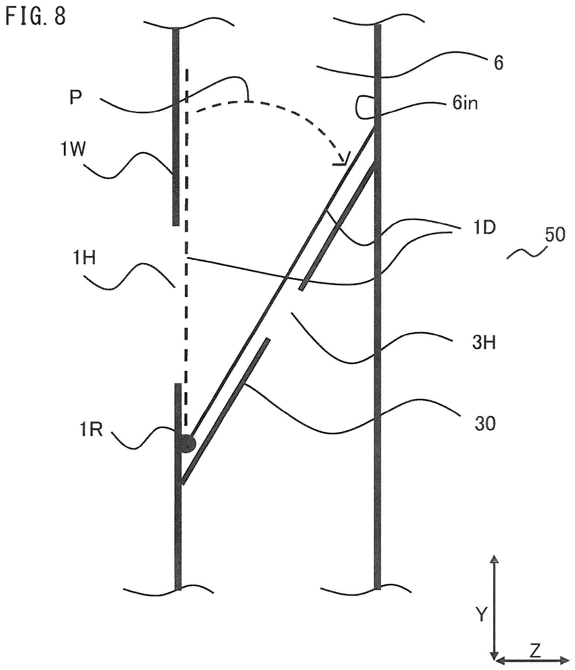

FIG. 8 is a partially enlarged sectional view of the switchgear 200 shown in FIG. 7.

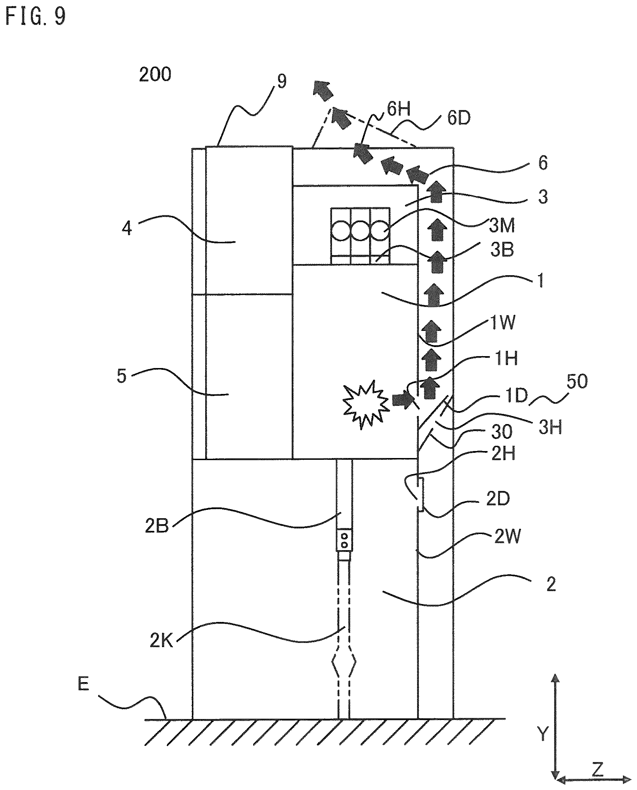

FIG. 9 is a conceptual diagram showing a path through which hot air caused by a pressure increase inside the main circuit chamber 1 is released in the main circuit chamber 1.

In the switchgear 200 of the present embodiment, a half-partition plate 30 as a partition plate is provided between the outlet 6H of the pressure release duct 6 and the pressure release opening 2H of the cable chamber 2, and below the pressure release opening 1H of the main circuit chamber 1.

The half-partition plate 30 is fixed to an inner wall surface 6in of the pressure release duct 6 by bolt fastening, welding, or the like.

As shown in FIG. 8, at least one through hole 3H is formed in the half-partition plate 30.

Accordingly, the inside of the pressure release duct 6 is not partitioned into a main circuit chamber 1 side and a cable chamber 2 side only by the half-partition plate 30.

When a pressure increase occurs inside the main circuit chamber 1 and the pressure release plate 1D opens the pressure release opening 1H according to the pressure increase, the pressure release plate 1D overlaps the half-partition plate 30.

As a result, the through hole 3H of the half-partition plate 30 is closed by the pressure release plate 1D, and a closing portion 50 that closes a passage of the pressure release duct 6 is constituted.

Therefore, as shown in FIG. 9, even when a failure such as a ground fault occurs in the main circuit chamber 1, a flow of hot air from the main circuit chamber 1 is limited to a flow direction upward from the half-partition plate 30, and does not affect the cable chamber 2 side.

Note that a size of a diameter of the through hole 3H is not particularly limited as long as the through hole 3H can be closed by the pressure release plate 1D.

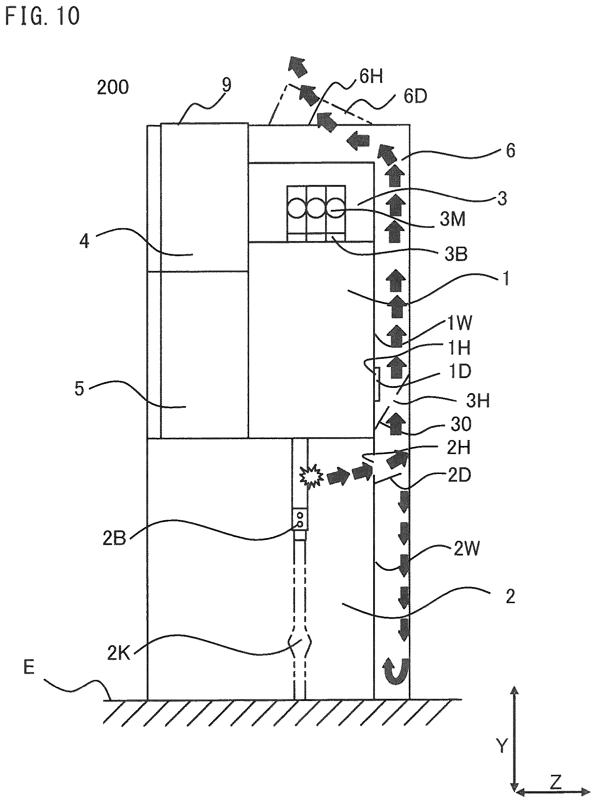

On the other hand, when a pressure increase occurs inside the cable chamber 2 and the pressure release plate 2H opens the pressure release opening 2H according to the pressure increase, hot air flows to an upper side of the pressure release duct 6 via the through hole 3H of the half-partition plate 30, as shown in FIG. 10.

In this way, a flow of hot air from the cable chamber 2 is not obstructed.

Thus, the same effect as Embodiment 1 can be achieved, and it is possible to reduce the influence on the cable chamber 2 side due to the pressure release from the main circuit chamber 1 while ensuring the pressure release operation on the cable chamber 2 side.

Further, since the closing portion 50 is constituted by the pressure release plate 1D and the half-partition plate 30, the strength of the pressure release plate 1D can be reduced.

Therefore, even when relatively small arc energy occurs in the main circuit chamber, the pressure release plate 1D operates to release pressure.

As a result, a pressure increase inside the main circuit chamber due to relatively small arc energy can be suppressed.

Hereinafter, another shape of the pressure release plate 1D will be described.

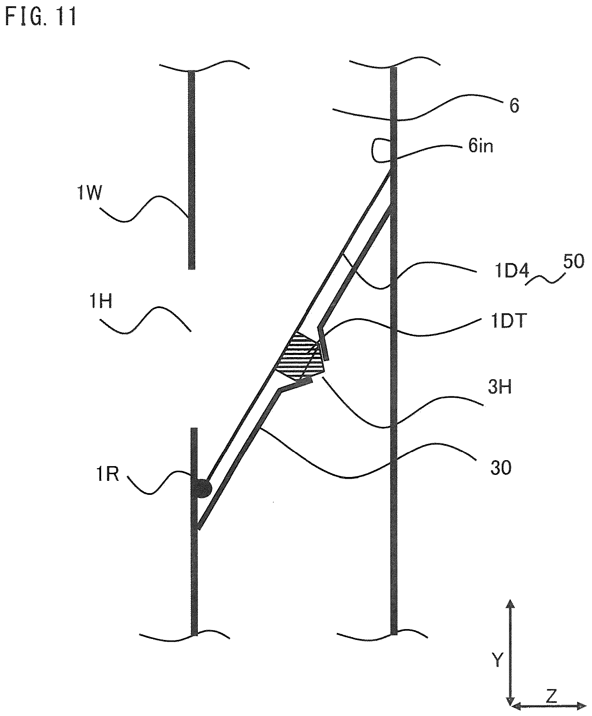

FIG. 11 is a sectional view showing an example of a shape of a pressure release plate 1D4 in Embodiment 2.

A protrusion 1DT is provided on a surface of the pressure release plate 1D facing the half-partition plate 30.

The protrusion 1DT is provided at a position that fits into the through hole 3H of the half-partition plate 30 when the pressure release plate 1D rotates around the support portion 1R.

In this way, by the protrusion 1DT fitting into the through hole 3H and closing the through hole 3H, a metal seal structure is formed, and a highly sealed closing portion 50 can be constituted.

Note that, if a diameter of the through hole 3H of the half-partition plate 30 is configured to be smaller than a diameter of the protrusion 1DT by a predetermined dimension, higher airtightness can be ensured.

Hereinafter, an example of another shape of the half-partition plate 30 will be described.

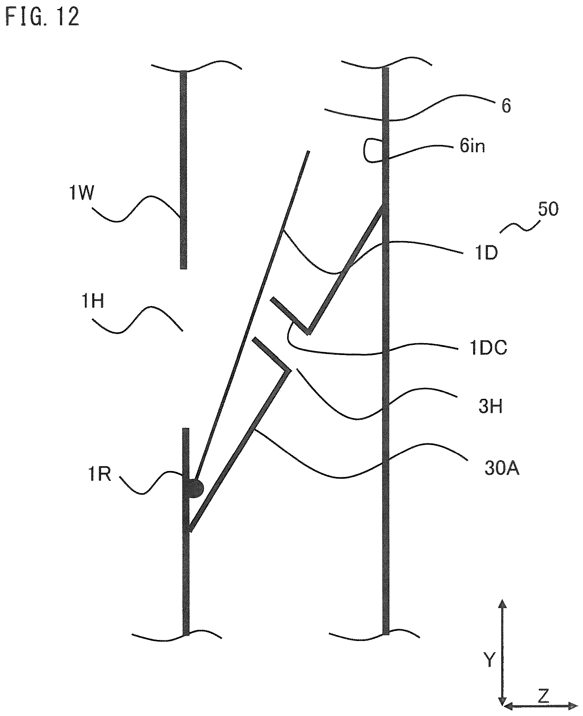

FIG. 12 is a perspective view showing an example of a shape of a half-partition plate 30A in Embodiment 2.A tubular portion 1DC made of a deformable member that rises from the half-partition plate 30A along a peripheral edge portion of the through hole 3H of the half-partition plate 30A is provided.

The tubular portion 1DC deforms by an external force due to contact with the pressure release plate 1D that moves away from the pressure release opening 1H so as to open the pressure release opening 1H, and closes the through hole 3H to constitute a closing portion 50.

If the strength of the tubular portion 1DC is adjusted so that the tubular portion 1DC reliably deforms in consideration of the weight of the pressure release plate 1D and the like, a highly sealed closing portion 50 can be constituted.

If the tubular portion 1DC is configured using a ductile material such as a metal member, the tubular portion 1DC plastically deforms by an external force due to contact with the pressure release plate 1D to close the through hole 3H, so sealing performance is improved.

The switchgear after the tubular portion 1DC has plastically deformed is temporarily stopped from being operated, and replacement work for each component is performed.

Further, for example, although not illustrated, a configuration may be adopted in which a creepage portion extending along the inner wall surface 6in of the pressure release duct 6 in the height direction Y as shown in FIG. 4 is formed at an edge portion of the half-partition plate 30. Also in this case, a wider area of an entire cross section of the pressure release duct 6 can be covered, and a highly sealed closing portion 50 can be constituted.

Hereinafter, an example of another shape of the pressure release plate 1D will be described.

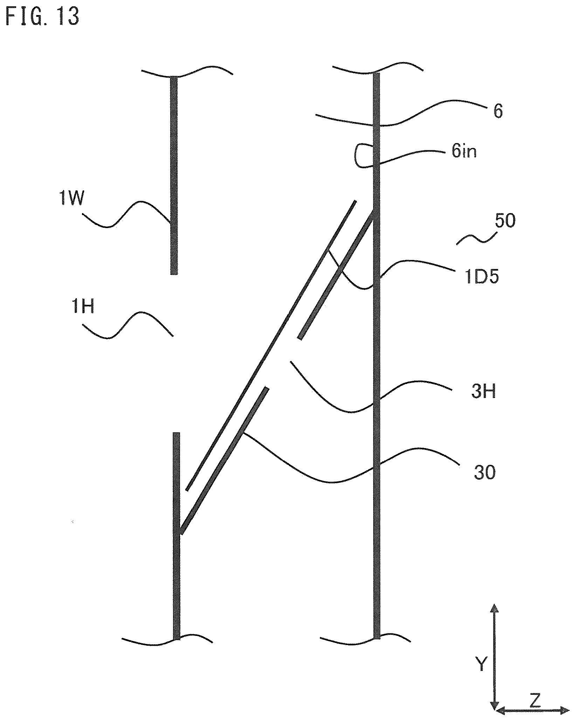

FIG. 13 is a perspective view showing an example of a shape of a pressure release plate 1D5 in Embodiment 2.

The pressure release plate 1D is configured such that a lower portion thereof in a height direction Y is not supported by the support portion 1R.

With this configuration, when pressure is released from the main circuit chamber 1, the pressure release plate 1D is separated from the main circuit chamber 1 toward the half-partition plate 30 side by a load due to pressure. The separated pressure release plate 1D overlaps the half-partition plate 30, and the through hole 3H of the half-partition plate 30 is closed by the pressure release plate 1D.

Thus, a closing portion 50 that closes a passage of the pressure release duct 6 is constituted.

In this way, the same effect as Embodiment 1 can be achieved, and it is possible to reduce the influence on the cable chamber 2 side due to the pressure release from the main circuit chamber 1 while ensuring the pressure release operation on the cable chamber 2 side.

Note that, in the above description, a gas-insulated switchgear is described as an example in which the main circuit unit is housed in a sealed container, and SF6 gas having excellent insulation performance is filled in the sealed container, but the present disclosure is not limited thereto, and can also be applied to an air-insulated switchgear in which the main circuit unit is housed in a partitioned portion in the atmosphere.

Further, a configuration may be adopted in which any one of the first pressure release plates 1D, 1D1, 1D2, and 1D3 shown in Embodiment 1 and the half-partition plate 30 of Embodiment 2 are provided.

Although the disclosure is described above in terms of various exemplary embodiments and implementations, it should be understood that the various features, aspects, and functionality described in one or more of the individual embodiments are not limited in their applicability to the particular embodiment with which they are described, but instead can be applied, alone or in various combinations to one or more of the embodiments of the disclosure.

It is therefore understood that numerous modifications which have not been exemplified can be devised without departing from the scope of the present disclosure. For example, at least one of the constituent components may be modified, added, or eliminated. At least one of the constituent components mentioned in at least one of the preferred embodiments may be selected and combined with the constituent components mentioned in another preferred embodiment.

### DESCRIPTION OF THE REFERENCE CHARACTERS

1: Main circuit chamber
2: Cable chamber
1H: Pressure release opening (first opening)
2H: Pressure release opening (second opening)
3H: Hole (through hole)
1W: First wall surface
2W: Second wall surface
1D, 1D1, 1D2, 1D3, 1D4, 1D5: Pressure release plate (first pressure release plate)
2D: Pressure release plate (second pressure release plate)
6: Pressure release duct
6H: outlet
9: Casing
30, 30A: Partition plate
1S: Creepage portion
1N: Claw portion
1DT: Protrusion
100, 200: Switchgear

## Claims

1. A switchgear having a main circuit chamber housing a main circuit device, a cable chamber housing a cable supplying electric power to the main circuit device, the main circuit chamber and the cable chamber being partitioned from each other and provided in a casing, and a duct discharging pressure inside the main circuit chamber and the cable chamber to an outside of the casing via an outlet, comprising:
a first pressure release plate covering a first opening provided on a first wall surface partitioning the main circuit chamber and the duct; and
a second pressure release plate covering a second opening provided on a second wall surface partitioning the cable chamber and the duct, wherein
the first pressure release plate is configured to open the first opening by an increase in pressure in the main circuit chamber so as to communicate the main circuit chamber and the duct,
the second pressure release plate is configured to open the second opening by an increase in pressure in the cable chamber so as to communicate the cable chamber and the duct,
the first opening is provided between the outlet and the second opening of the duct, and
the first pressure release plate constitutes a closing portion closing a passage of the duct between the first opening and the second opening inside the duct in a state where the first opening is opened.

2. The switchgear according to claim 1,
wherein
a partition plate in which a through hole is formed is provided between the first opening and the second opening inside the duct, and
in the state where the first opening is opened, the first pressure release plate opening the first opening overlaps the partition plate and closes the through hole so as to constitute the closing portion

3. The switchgear according to claim 2, wherein
the first pressure release plate provided with a protrusion fitting into the through hole of the partition plate and closes the through hole so as to constitute the closing portion in the state where the first opening is opened.

4. The switchgear according to claim 3, wherein
the through hole is configured such that a size of a diameter of the through hole is set to be smaller by a predetermined dimension than a size of a diameter of the protrusion.

5. The switchgear according to claim 2, wherein
a tubular portion rising from the partition plate along a peripheral edge portion of the through hole and is deformable by stress is provided on the partition plate, and
the tubular portion deforms by stress due to contact with the first pressure release plate at the time of opening of the first opening so as to close the through hole and constitute the closing portion.

6. The switchgear according to any one of claims 2 to 5, wherein
an end portion of the first pressure release plate is rotatably supported by a support portion at an edge portion of the first opening, and
the partition plate is provided at a position between the first opening and the second opening, and is provided at a position where the first pressure release plate can overlap the partition plate and close the through hole when the first pressure release plate is rotated with the support portion as a fulcrum at the time of opening of the first opening.

7. The switchgear according to any one of claims 1 to 6, wherein
the first pressure release plate has a length such that an edge portion of the first pressure release plate reaches an inner wall surface of the duct so as to constitute the closing portion.

8. The switchgear according to any one of claims 1 to 7, wherein
the first pressure release plate has a creepage portion that extends along the inner wall surface of the duct at an edge portion of the first pressure release plate so as to constitute the closing portion.

9. The switchgear according to any one of claims 1 to 7, wherein
the first pressure release plate comprising, at an edge portion thereof, a claw portion bent toward an inner wall surface of the duct so as to constitute the closing portion.
